(19)

Europäisches
Patentamt
European
Patent Office
Office européen
des brevets

(11) **EP 3 270 349 A1**

(12) **EUROPEAN PATENT APPLICATION**
published in accordance with Art. 153(4) EPC

(43) Date of publication:
**17.01.2018 Bulletin 2018/03**

(21) Application number: **16764618.1**

(22) Date of filing: **19.02.2016**

(51) Int Cl.:
*G06Q 50/06* (2012.01)      *H02J 3/00* (2006.01)
*H02J 3/38* (2006.01)

(86) International application number:
**PCT/JP2016/054789**

(87) International publication number:
**WO 2016/147788 (22.09.2016 Gazette 2016/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **13.03.2015 JP 2015051015**

(71) Applicants:
• **KABUSHIKI KAISHA TOSHIBA**
**Minato-ku**
**Tokyo**
**105-8001 (JP)**
• **Toshiba Infrastructure Systems &
Solutions Corporation**
**Kawasaki-shi, Kanagawa 212-8585 (JP)**

(72) Inventors:
• **KUBOTA Kazuto**
**Kawasaki-shi, Kanagawa 2128585 (JP)**
• **SUYAMA Akihiro**
**Kawasaki-shi, Kanagawa 2128585 (JP)**
• **EDAHIRO Toshiaki**
**Kawasaki-shi, Kanagawa 2128585 (JP)**
• **WADA Takahisa**
**Kawasaki-shi, Kanagawa 2128585 (JP)**
• **MATSUE Kiyotaka**
**Kawasaki-shi, Kanagawa 2128585 (JP)**
• **TONAMI Yosuke**
**Kawasaki-shi, Kanagawa 2128585 (JP)**
• **ARAI Riho**
**Kawasaki-shi, Kanagawa 2128585 (JP)**

(74) Representative: **Moreland, David**
**Marks & Clerk LLP**
**Aurora**
**120 Bothwell Street**
**Glasgow G2 7JS (GB)**

(54) **STORAGE BATTERY OPERATION PLAN CREATING DEVICE, STORAGE BATTERY
OPERATION PLAN CREATING METHOD, AND PERMANENT RECORDING MEDIUM**

(57)      A storage battery operation plan creation device of an embodiment includes a planner. The planner creates an operation plan of a storage battery on the basis of a graph created on the basis of both a prediction result of each of a power demand and an amount of power generated by a system which uses renewable energy and electricity rate information representing information of an electric power unit price of each time, the graph including a link representing a change of the remaining amount of the storage battery due to charging/discharging of the storage battery at each time and information of a power cost of a destination node of the link caused by the change of the remaining amount.

FIG. 2

**Description**

[Technical Field]

The present invention relates to a storage battery operation plan creation device, a storage battery operation plan creation method, and a non-transitory computer readable storage medium.

[Background Art]

In the related art, solar power generation systems (hereinafter referred to as "PV systems") and storage batteries have been introduced in residences for the purpose of energy saving, cost saving, and utilization of natural energy. Using the PV system and a storage battery to cover power demand during power generation of the PV system by discharging the storage battery, it is possible to increase the amount of sold PV power. This is called a boosting effect. However, in this method, if the storage battery becomes empty, the storage battery cannot be charged and discharged any more. In this case, it is not possible to reduce heating and lighting costs by discharging the storage battery to achieve the boosting effect of the PV system. Therefore, it is necessary to create a practical operation plan. However, the conventional method may sometimes not be able to create an operation plan when the processing requires time.

[Citation List]

[Patent Literature]

[Patent Literature 1]
Japanese Unexamined Patent Application, First Publication No. 2014-174735

[Summary of Invention]

[Technical Problem]

An object of the present invention is to provide a storage battery operation plan creation device, a storage battery operation plan creation method, and a non-transitory computer readable storage medium which can easily create an operation plan.

[Solution to Problem]

A storage battery operation plan creation device of an embodiment includes a planner. The planner creates an operation plan of a storage battery on the basis of a graph created on the basis of both a prediction result of each of a power demand and an amount of power generated by a system which uses renewable energy and electricity rate information representing information of an electric power unit price of each time, the graph including a link representing a change of the remaining amount of the storage battery due to charging/discharging of the storage battery at each time and information of a power cost of a destination node of the link caused by the change of the remaining amount.

[Brief Description of Drawings]

Fig. 1 is a system configuration diagram showing a system configuration of an operation plan creation system according to an embodiment.
Fig. 2 is a schematic block diagram showing a configuration of an operation plan creation device 2 according to a first embodiment.
Fig. 3 is a schematic block diagram showing a configuration of a planner 23.
Fig. 4 is a diagram showing a specific example of a charge/discharge worth table.
Fig. 5 is a diagram showing a specific example of a charge/discharge amount table.
Fig. 6 shows an example of a charge/discharge graph.
Fig. 7 is a diagram showing an example of prediction results of PV power generation prediction and power demand prediction.
Fig. 8 is a diagram showing an example of an electric power unit price at each time.
Fig. 9 is a diagram showing an example of a charge/discharge graph created on the basis of prediction results and the electric power unit price.

Fig. 10 is a diagram showing an example in which link weighting has been performed on the charge/discharge graph shown in Fig. 9.

Fig. 11 is a diagram showing an example in which node weighting has been performed on the charge/discharge graph shown in Fig. 9.

Fig. 12 is a diagram showing an example of a created operation plan.

Fig. 13 is a flowchart showing a flow of processes of the operation plan creation device 2 according to the first embodiment.

Fig. 14 is a flowchart showing a flow of an operation plan creation process.

Fig. 15 is a diagram showing a specific example of a reverse-directed charge/discharge graph.

Fig. 16 is a system configuration diagram showing a system configuration in a fourth embodiment.

[Description of Embodiments]

Hereinafter, a storage battery operation plan creation device, a storage battery operation plan creation method, and a non-transitory computer readable storage medium according to embodiments will be described with reference to the drawings.

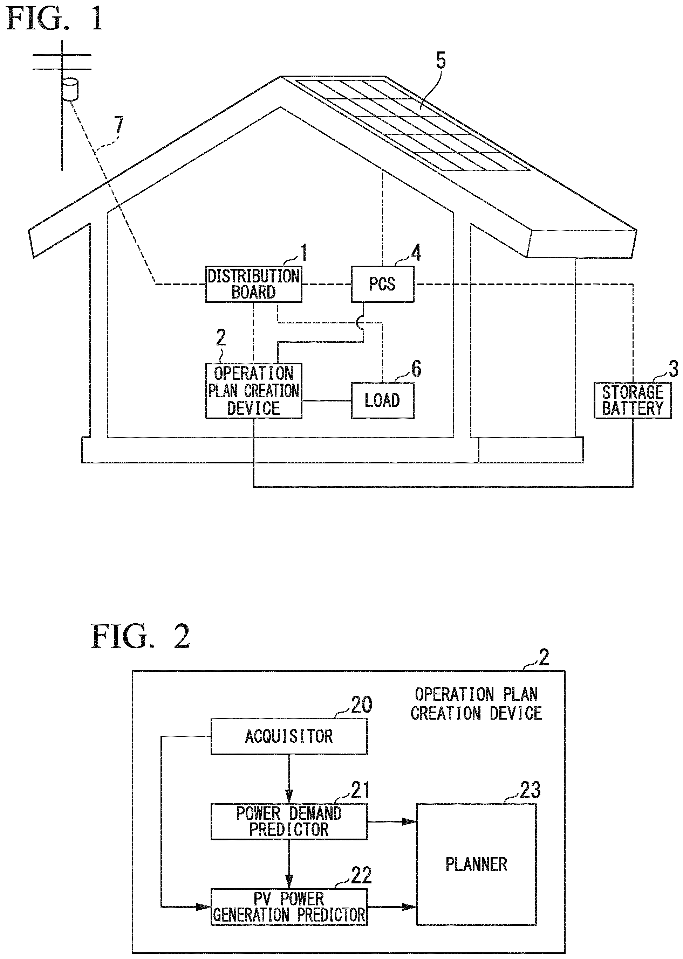

Fig. 1 is a system configuration diagram showing a system configuration of the operation plan creation system according to an embodiment.

The operation plan creation system includes a distribution board 1, an operation plan creation device 2, a storage battery 3, a power conditioning system (PCS) 4, and a photovoltaic power generation system (PV system) 5. In Fig. 1, a solid line is a data line indicating a path through which data is transmitted and received between the operation plan creation device 2 and each device and a dashed line is a power supply line.

The distribution board 1 supplies power supplied from an electric power system 7 to the operation plan creation device 2, the storage battery 3, the PCS 4, the PV system 5, and a load 6 connected to the distribution board 1. The distribution board 1 is also provided with a measuring device that measures the amount of power consumed for each power supply line. The measuring device is provided for each breaker to which a load 6 is connected and measures the amount of power consumed by each load 6 connected to each breaker. The measuring device transfers the measured power consumption of each load 6 to the operation plan creation device 2. The distribution board 1 also has the function of an earth leakage breaker.

The operation plan creation device 2 creates an operation plan of the storage battery 3.

The storage battery 3 stores electric power supplied by the PCS 4. The storage battery 3 supplies stored power (DC power) to the PCS 4 under the control of the operation plan creation device 2.

The PCS 4 includes an inverter (not shown) to convert DC power supplied from the storage battery 3 and the PV system 5 into AC power and to supply the AC power to the distribution board 1. The PCS 4 also has a function of measuring a charge/discharge amount of the storage battery 3 and the amount of power generated by the PV system 5. The PCS 4 transfers information regarding the measured amount of generated power and information regarding the charge/discharge amount to the operation plan creation device 2. The PCS 4 also includes a converter (not shown) to convert purchased power (AC power) into DC power and to supply the DC power to the storage battery 3. This allows the PCS 4 to charge the storage battery 3 with purchased power even in the middle of the night. The PCS 4 may also supply electric power generated by the PV system 5 to the storage battery 3. Although Fig. 1 shows a configuration in which the PCS 4 is connected to the PV system 5 and the storage battery 3, the present invention is not necessarily limited to this configuration. For example, both a PCS for the PV system 5 and a PCS for the storage battery 3 may be provided in the operation plan creation system.

The PV system 5 is a system that directly converts sunlight (renewable energy) into electric power using a plurality of solar cells. The PV system 5 supplies the generated power (DC power) to the PCS 4.

The load 6 is an electric device which uses electric power and is, for example, a home electric appliance or the like. Specific examples of the home electric appliances include lighting, an air conditioner, and a heat pump type water heater.

Hereinafter, each of the (first to fourth) embodiments of the operation plan creation device 2 in the operation plan creation system will be described in detail.

(First embodiment)

Fig. 2 is a schematic block diagram showing a configuration of the operation plan creation device 2 according to the first embodiment.

The operation plan creation device 2 includes a central processing unit (CPU), a memory, an auxiliary storage device, and the like connected by buses and executes an operation plan creation program. By executing the operation plan creation program, the operation plan creation device 2 functions as a device including an acquisitor 20, a power demand predictor 21, a PV power generation predictor 22, and a planner 23. All or some of the functions of the operation plan creation device 2 may also be realized using hardware such as an application specific integrated circuit (ASIC), a programmable logic device (PLD), or a field programmable gate array (FPGA). The operation plan creation program may be recorded on a computer readable recording medium. The computer-readable recording medium is a storage device such as a flexible disk, a magneto-optical disk, a portable medium such as a CD-ROM, a read only memory (ROM), or a hard disk provided in a computer system. The operation plan creation program may also be transmitted and received via an electric communication line.

The acquisitor 20 acquires various types of information. For example, the acquisitor 20 acquires weather data. The weather data is data regarding weather in an area where the acquisitor 20 is located. The acquisitor 20 acquires air temperature, humidity, atmospheric pressure, precipitation amounts, or wind speed as weather data. The acquisitor 20 may also acquire weather data of the area where the acquisitor 20 is located, for example, from a weather information website on the Internet. The acquisitor 20 also acquires electricity rate information. The electricity rate information is information regarding electricity rates and represents, for example, information regarding the electric power unit prices of purchased power and sold power at each time.

The power demand predictor 21 predicts a power demand of the next day. For example, the power demand predictor 21 predicts a power demand of the next day from a history of the past power demand of a residence in which the power demand predictor 21 is provided. A power demand of the next day can be predicted simply using power demand one week before.

The PV power generation predictor 22 predicts the amount of power generated by solar power generation of the PV system 5. For example, the PV power generation predictor 22 generates a predicted value of the amount of power generated by solar power generation on the basis of performance values of the photovoltaic power generation and a weather forecast. For example, a technique described in Literature 1 may be used as a method of performing solar radiation prediction from a weather forecast every three hours (Literature 1: Shimada, Kurokawa, "Insolation Forecasting Using Weather Forecast with Weather Change Patterns," IEEE Trans. PE, pp. 1219 - 1225, Vol. 127, No. 11,2007).

The planner 23 creates an operation plan of the storage battery 3 on the basis of the prediction results of the power demand and the PV power generation and the electricity rate information. Hereinafter, a specific configuration of the planner 23 will be described.

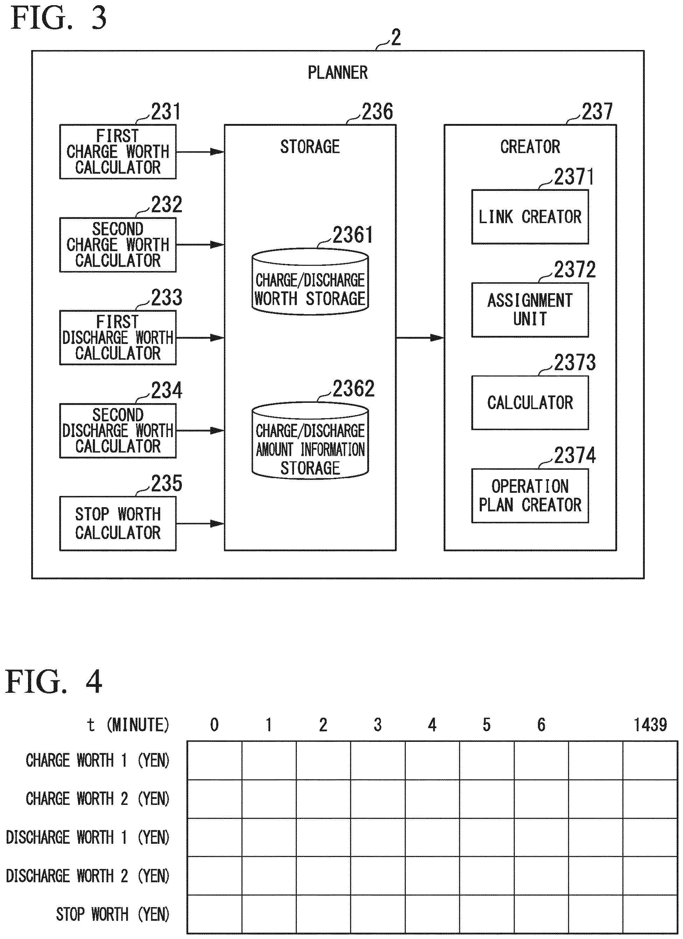

Fig. 3 is a schematic block diagram showing the configuration of the planner 23.

As shown in Fig. 3, the planner 23 includes a first charge worth calculator 231, a second charge worth calculator 232, a first discharge worth calculator 233, a second discharge worth calculator 234, a stop worth calculator 235, a storage 236, and a creator 237. Here, as a preparation for explanation, let PV(t) be the time series of the power generation prediction of the PV power generation predictor 22. Here, t is a variable which represents a time in a day and has a value from 0 to 1439 when prediction is performed minute by minute for a day. Also, let D(t) be the time series of the demand prediction of the power demand predictor 21. Let PriceBuy(t) be the price of power at time t. Let PriceSell(t) be the purchase price of power generated by the PV system 5 at time t.

The first charge worth calculator 231 calculates a first charge worth. The first charge worth is the sum of the electric power unit price required when the storage battery 3 is fully charged and a surplus power of the PV system 5 that was available for sale. Specifically, the first charge worth calculator 231 calculates the first charge worth CHGval 1(t) on the basis of the following Equations 1 to 4.

[Math. 1]

$$PVovD(t) = PV(t) - D(t) \quad (PV(t) > D(t))$$
$$= 0 \quad (PV(t) \le D(t)) \quad \dots (1)$$

[Math. 2]

$$DovPV(t) = D(t) - PV(t) \quad (D(t) > PV(t))$$
$$= 0 \quad (D(t) \le PV(t)) \quad \dots (2)$$

[Math. 3]

$$CHGamount1(t) = \min(Limit(t) - DovPV(t), LimitBat - PVovD(t)) \quad \dots (3)$$

[Math. 4]

$$CHGval1(t) = PVovD(t) \times \mathrm{Pr}iceSell(t) + CHGamount1(t) \times \mathrm{Pr}iceBuy(t) \quad \dots$$

$$(4)$$

Here, PVovD in Equation 1 represents the surplus of the PV system 5 and DovPV in Equation 2 represents the surplus of the demand. LimitBat in Equation 3 is the maximum charge power of the storage battery 3 and Limit(t) is contract power. The first term (PVovD(t) × PriceSell(t)) of Equation 4 is the selling price of the surplus power of the PV system 5 that was available for sale and the second term (CHGamount 1(t) × PriceBuy T)) is a cost required to charge the storage battery 3 with power from the electric power system 7. CHGamount1(t) in Equation 4 represents a first charge amount. It is also assumed that the charge power is set within a range not exceeding the upper limit of the capacity of the storage battery.

The second charge worth calculator 232 calculates a second charge worth. The second charge worth is the amount of surplus power of the PV system 5 that could not be sold when the storage battery 3 is charged with the surplus power of the PV system 5 as much as possible. Specifically, the second charge worth calculator 232 calculates the second charge worth CHGval 2(t) on the basis of the following Equations 5 and 6. CHGamount2(t) in Equation 5 represents a second charge amount.

[Math. 5]

$$CHGamount2(t) = \min(PVovD(t), LimitBat) \quad \dots (5)$$

[Math. 6]

$$CHGval2(t) = CHGamount2(t) \times \mathrm{Pr}iceSell(t) \quad \dots (6)$$

The first discharge worth calculator 233 calculates a first discharge worth. The first discharge worth is the sum of a reduction in the electric power unit price which can be achieved when the storage battery 3 is discharged to the demand level and an increase in revenue (a boosting effect) due to an increase in power sales by the PV system 5. Specifically, the first discharge worth calculator 233 calculates the first discharge worth DisCHGval 1(t) on the basis of the following Equations 7 and 8. The discharge amount has an upper limit corresponding to the constraint of the dischargeable power or the storage battery capacity.

[Math. 7]

$$PVpush(t) = \min(PV(t), D(t)) \quad \dots (7)$$

[Math. 8]

$$DisCHGval1(t) = PVpush(t) \times \mathrm{Pr}iceSell(t) + DovPV(t) \times \mathrm{Pr}iceBuy(t) \quad \dots$$

$$(8)$$

PVpush(t) in Equation 7 represents an increase in revenue (a boosting effect) due to an increase in power sales by the PV system 5. The first discharge worth calculator 233 also calculates a first discharge amount DisCHGamount1(t) on the basis of the following Equation 9.

[Math. 9]

$$DisCHGamount1(t) = D(t) \quad \dots (9)$$

The second discharge worth calculator 234 calculates a second discharge worth. The second discharge worth is a reduction in the purchase cost which can be achieved when the storage battery 3 is discharged to the level of the surplus of the demand for the PV system 5. Specifically, the second discharge worth calculator 234 calculates the second discharge worth DisCHGval 2(t) on the basis of the following Equation 10.
[Math. 10]

$$DisCHGval2(t) = DovPV(t) \times \Pr iceBuy(t) \quad \dots (10)$$

The second discharge worth calculator 234 also calculates a second discharge amount DisCHGamount2(t) on the basis of the following Equation 11.
[Math. 11]

$$DisCHGamount2(t) = DovPV(t) \quad \dots (11)$$

The stop worth calculator 235 calculates a stop worth. The stop worth is a cost increase and/or a revenue increase when the storage battery 3 is not used. Specifically, the stop worth calculator 235 calculates the stop worth val(t) on the basis of the following Equation 12.
[Math. 12]

$$val(t) = 0 \quad \dots (12)$$

In the following description, the first charge worth calculator 231, the second charge worth calculator 232, the first discharge worth calculator 233, the second discharge worth calculator 234, and the stop worth calculator 235 are each referred to as a calculator when not distinguished. In the following description, the first charge worth and the second charge worth are also each referred to as a charge worth when not distinguished. In the following description, the first discharge worth and the second discharge worth are also each referred to as a discharge worth when not distinguished.
The storage 236 includes a charge/discharge worth storage 2361 and a charge/discharge amount information storage 2362.
The charge/discharge worth storage 2361 is configured using a storage device such as a magnetic hard disk device or a semiconductor storage device. The charge/discharge worth storage 2361 stores a charge/discharge worth table.
Fig. 4 is a diagram showing a specific example of the charge/discharge worth table.
In the charge/discharge worth table shown in Fig. 4, the vertical axis represents the worth and the horizontal axis represents time. Values of the worth are those of the charge worth, the discharge worth, and the stop worth at each time calculated by the calculator s. The value of the time represents the time when the values of the worth are calculated. In the example of Fig. 4, the time is expressed in minutes. Charge worth 1 shown in Fig. 4 corresponds to the first charge worth, charge worth 2 corresponds to the second charge worth, discharge worth 1 corresponds to the first discharge worth, and discharge worth 2 corresponds to the second discharge worth.
The charge/discharge amount information storage 2362 is configured using a storage device such as a magnetic hard disk device or a semiconductor storage device. The charge/discharge amount information storage 2362 stores a charge/discharge amount table.

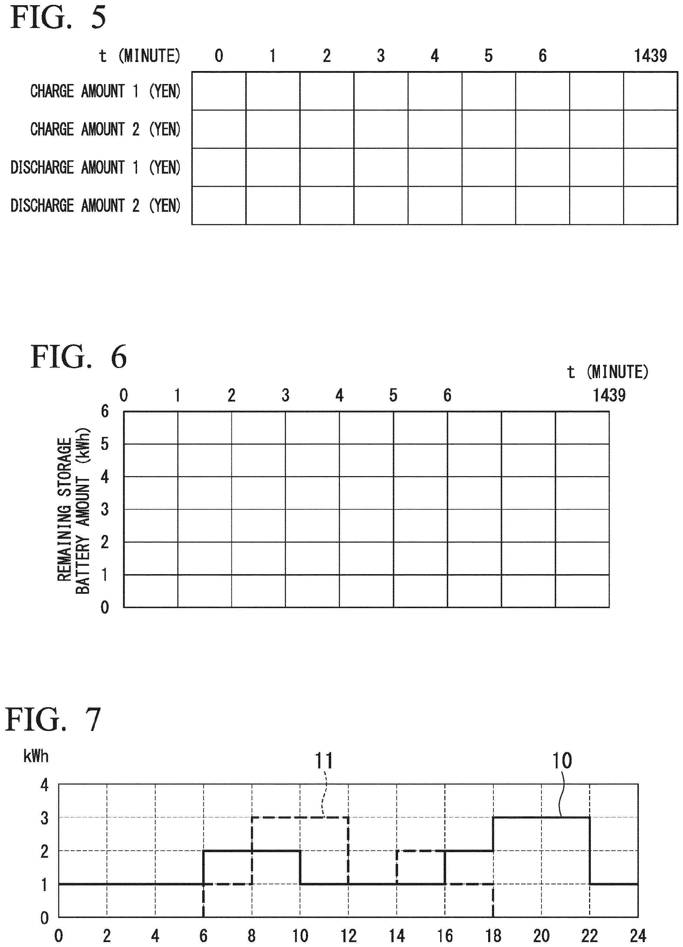

Fig. 5 is a diagram showing a specific example of the charge/discharge amount table.
In the charge/discharge amount table shown in Fig. 5, the vertical axis represents the charge/discharge amount and the horizontal axis represents time. Charge amounts at each time calculated by the first charge worth calculator 231 and the second charge worth calculator 232 are recorded in entries of the charge amount items. Discharge amounts at each time calculated by the first discharge worth calculator 233 and the second discharge worth calculator 234 are recorded in entries of the discharge amount items. Charge amount 1 shown in Fig. 5 corresponds to the first charge amount, charge amount 2 corresponds to the second charge amount, discharge amount 1 corresponds to the first discharge amount, and discharge amount 2 corresponds to the second discharge amount.

The creator 237 includes a link creator 2371, an assignment unit 2372, a calculator 2373, and an operation plan creator 2374.

The link creator 2371 creates links for each time in a charge/discharge graph used to set up an operation plan on the basis of the charge/discharge worth table and the charge/discharge amount table. Here, as preprocessing, the link creator 2371 recalculates the charge/discharge amount and the charge/discharge worth such that the remaining amount of the storage battery 3 after charging/discharging takes discrete values. For example, the remaining amount of a 6.6 kWh storage battery 3 is assumed to take values of 0 Wh, 100 Wh, 200 Wh, ...,6500 Wh, and 6600 Wh when the remaining amount of the storage battery 3 is discretized in units of 100 Wh. For example, with a storage battery 3 having a charge/discharge capacity of 200 v and 30 A, it is possible to charge and discharge 100 Wh of power in 1 minute. In a method of recalculation, the charge/discharge power at each time is adjusted such that the charge/discharge power takes a value in units of 100 Wh. The link creator 2371 recalculates the charge/discharge worth accordingly. The recalculated values are recorded in the charge/discharge worth table and the charge/discharge amount table. An example of the charge/discharge graph is shown in Fig. 6.

Fig. 6 is a diagram showing an example of the charge/discharge graph.

In the charge/discharge graph shown in Fig. 6, the vertical axis represents the remaining amount of the storage battery and the horizontal axis represents time. On the basis of the charge/discharge worth table and the charge/discharge amount table, the link creator 2371 creates links that can be taken from time t (for example, time 0) to time t + 1 (for example, time 1). A specific process of this will be described later.

The assignment unit 2372 assigns a link weight to a link created by the link creator 2371 on the basis of the charge/discharge worth table and the charge/discharge amount table. The link weight represents a cost of the link. Further, the assignment unit 2372 assigns a node weight to a source node of the link created by the link creator 2371 on the basis of the charge/discharge worth table and the charge/discharge amount table. The node weight represents a cost of the source node.

The calculator 2373 calculates final weights of nodes on the basis of the electricity rate information and weights assigned by the assignment unit 2372.

The operation plan creator 2374 creates an operation plan on the basis of the calculation result of the calculator 2373 and the charge/discharge graph.

Next, an operation planning method according to the present embodiment will be described with reference to specific examples using Figs. 7 to 11. In this description, it is assumed that the time intervals are 2 hours, the capacity of the storage battery can take values in units of 1 kWh, and the upper limit thereof is 3 kWh.

Fig. 7 is a diagram showing an example of prediction results of PV power generation prediction and power demand prediction.

In Fig. 7, the vertical axis represents the amount of power and the horizontal axis represents time. In addition, in Fig. 7, a solid line 10 represents a prediction result of power demand prediction and a dashed line 11 represents a prediction result of PV power generation prediction. For example, in the example shown in Fig. 7, it is shown that, during the time from 0 o'clock to 6 o'clock, there is no amount of power generated by PV power generation and there is a 1 kWh power demand at each time.

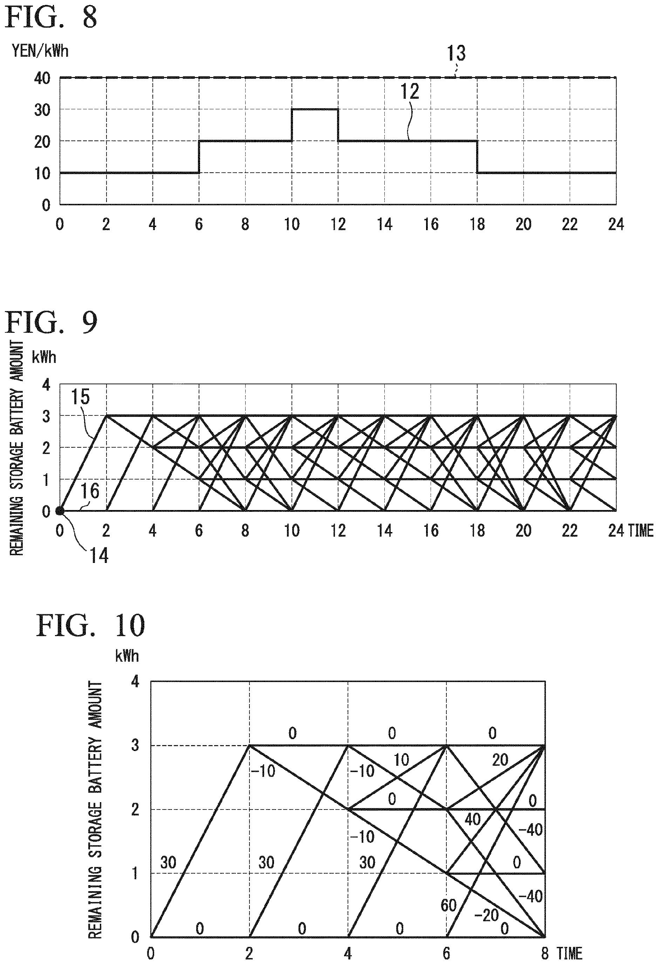

Fig. 8 is a diagram showing an example of the electric power unit price at each time. In Fig. 8, the vertical axis represents the electric power unit price and the horizontal axis represents time. In addition, in Fig. 8, a solid line 12 represents a predicted value of purchased power from the electric power system 7 and a dashed line 13 represents a predicted value of sold power of the electric power generated by power generation of the PV system 5. For example, in the example shown in Fig. 8, it is shown that, during the time from 0 o'clock to 6 o'clock, the unit price of the purchased power, at each time, from the electric power system 7 is 10 yen per 1 kWh and the electric power unit price at each time of the sold power is 40 yen per 1 kWh.

Next, the link creator 2371 creates links of the charge/discharge graph as follows. For simplicity of explanation, it is assumed that the time t is 0 and the remaining storage battery amount SOC is 0. However, the time t and the SOC may be the initial time when setting up the operation plan and a remaining amount of the storage battery at that time, respectively. Nodes of the graph have weights.

(Step 1)

t = 0, SOC (0) = 0, weight (0, 0) = 0.

(Step 2)

To create links 1 to 5 from time t to t + 1.

Link 1: A link of the first charge amount. The link creator 2371 creates a link from (t, SOC(t)) to (t + 1, SOC(t) + CHGamount1(t)) in the graph. Here, the assignment unit 2372 assigns a weight of CHGval 1(t) to the created link.

Link 2: A link of the second charge amount. The link creator 2371 creates a link from (t, SOC(t)) to (t + 1, SOC(t) + CHGamount2(t)) in the graph. Here, the assignment unit 2372 assigns a weight of CHGval 2(t) to the created link.

Link 3: A link of the first discharge amount. The link creator 2371 creates a link from (t, SOC(t)) to (t + 1, SOC(t) + disCHGamount1(t)) in the graph. Here, the assignment unit 2372 assigns a weight of -DisCHGval 1(t) to the created link.

Link 4: A link of the second discharge amount. The link creator 2371 creates a link from (t, SOC(t)) to (t + 1, SOC(t) + disCHGamount2(t)) in the graph. Here, the assignment unit 2372 assigns a weight of -DisCHGval 2(t) to the created link.

Link 5: A stop link. The link creator 2371 establishes a link from (t, SOC(t)) to (t + 1, SOC(t)). Here, the assignment unit 2372 assigns a weight of 0 to the created link.

(Step 3)

$$t = t + 1.$$

If t < end time, the process is performed from step 1. The end time may be preset or dynamically changed.

(Step 4)

t=0

(Step 5)

For all nodes that are sources of links at time t, the assignment unit 2372 performs a process of step 5-1 described below.

(Step 5-1)

For every link originating from a certain node, the assignment unit 2372 assigns a value, obtained by adding a weight of the link to a weight of the source node of the link, as a weight of a destination node of the link. Here, when a weight has already been assigned to the destination node of the link, the assignment unit 2372 compares the assigned weight value and a value to be newly assigned and assigns the smaller value as a weight of the node which is the destination of the link. When the weight of the link has been replaced, the assignment unit 2372 sets a flag on the link.

(Step 6)

$$t = t + 1.$$

If t < end time, the process is performed from step 5.

(Step 7)

First, for each node at the end time, the calculator 2373 calculates a value obtained by multiplying the remaining storage battery amount of the node by the purchase price of power at that time. Then, the calculator 2373 sets values obtained by subtracting the calculated values from the weights of the nodes as final weights of the group of nodes.

(Step 8)

The operation plan creator 2374 creates, as an operation plan, a path traced through flags from a node with the smallest final weight.

In this manner, the operation plan is created. This method is a so-called dynamic programming method.

Fig. 9 is a diagram showing an example of a charge/discharge graph created on the basis of prediction results and the electric power unit price.

Fig. 9 shows links of a charge/discharge graph calculated from PV power generation prediction and power demand prediction at each time. For example, links 15 and 16 are created as links from node 14 at time 0.

Fig. 10 is a diagram showing an example in which link weighting has been performed on the charge/discharge graph shown in Fig. 9.

In the example shown in Fig. 10, weights have been assigned to links from a time of 0 o'clock to a time of 8 o'clock. For example, it is shown that a cost of 30 yen is required when charging the storage battery with 3 kWh of power from the time 0 o'clock to the time 2 o'clock. For example, it is also shown that, when 10 kWh of power stored in the storage battery is used from the time 2 o'clock to the time 4 o'clock, a cost of 10 yen is saved since it is not necessary to purchase power from the electric power system 7.

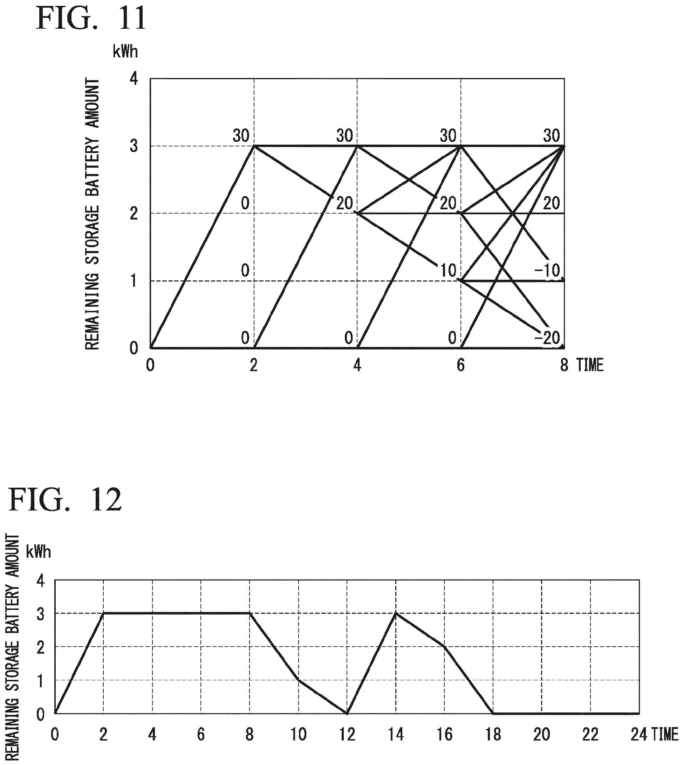

Fig. 11 is a diagram showing an example in which node weighting has been performed on the charge/discharge graph shown in Fig. 9.

In the example shown in Fig. 11, weights have been assigned to nodes from the time 0 o'clock to the time 8 o'clock. For example, it is shown that a cost of 30 yen is required when charging the storage battery with 3 kWh of power from the time 0 o'clock to the time 2 o'clock.

An operation plan created by the above process is shown in Fig. 12.

Fig. 12 is a diagram showing an example of the created operation plan.

By controlling the storage battery 3 according to the operation plan shown in Fig. 12, it is possible to perform practical operations.

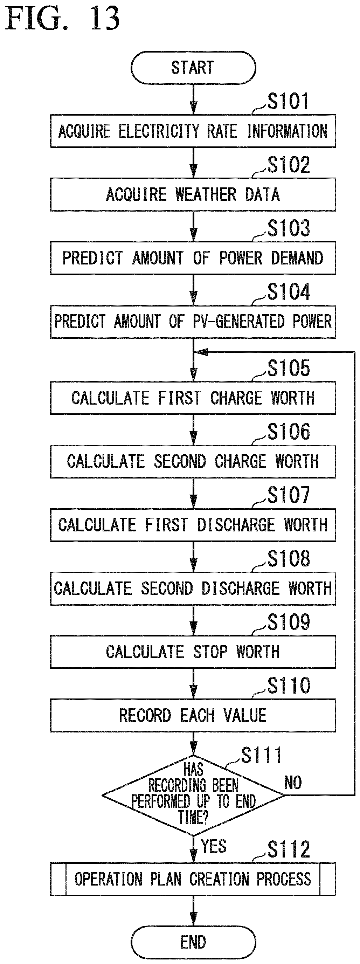

Fig. 13 is a flowchart showing a flow of processes of the operation plan creation device 2 according to the first embodiment.

The acquisitor 20 acquires electricity rate information (step S101). Further, the acquisitor 20 acquires weather data (step S102). The acquisitor 20 outputs the acquired electricity rate information and weather data to the power demand predictor 21 and the PV power generation predictor 22. The power demand predictor 21 predicts the amount of power demand at each time (for example, for one day) (step S103). The power demand predictor 21 outputs the predicted amount of power demand to the planner 23. Next, the PV power generation predictor 22 predicts the amount of PV-generated power at each time (for example, for one day) (step S104). The PV power generation predictor 22 outputs the predicted amount of PV-generated power to the planner 23.

The first charge worth calculator 231 calculates a first charge worth on the basis of the output prediction result (step S105). The second charge worth calculator 232 calculates a second charge worth on the basis of the output prediction result (step S106). The first discharge worth calculator 233 calculates a first discharge worth on the basis of the output prediction result (step S107). The second discharge worth calculator 234 calculates a second discharge worth on the basis of the output prediction result (step S108). The stop worth calculator 235 calculates a stop worth on the basis of the output prediction result (step S109). The calculator records each value in the charge/discharge worth table and the charge/discharge amount table according to the calculation result (step S110).

The calculator determines whether or not recording in the charge/discharge worth table and the charge/discharge amount table has been performed up to the end time (step S111). When recording in the charge/discharge worth table and the charge/discharge amount table has not been performed up to the end time (NO in step S111), the process is performed from step S105 onward.

On the other hand, when recording in the charge/discharge worth table and the charge/discharge amount table has been performed up to the end time (YES in step S111), the creator 237 performs an operation plan creation process (step S 112).

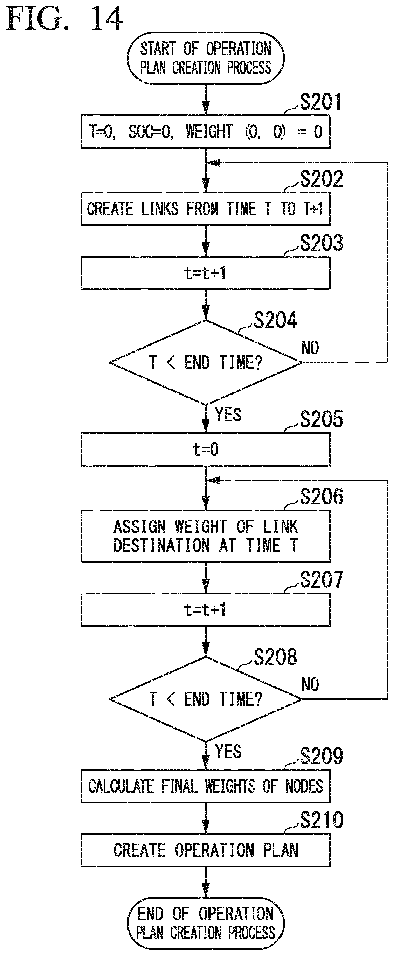

Fig. 14 is a flowchart showing the flow of the operation plan creation process.

First, the link creator 2371 creates links using a charge/discharge graph. Specifically, the link creator 2371 sets the initial time t to 0 (t = 0) and the remaining storage battery amount SOC at that time to 0 (SOC = 0). In addition, the link creator 2371 sets a weight of the node to 0 ((0, 0) = 0) (step S201). Next, the link creator 2371 creates links that can be taken from time t to time t + 1 on the basis of the charge/discharge worth table and the charge/discharge amount table (step S202). Next, the link creator 2371 shifts the process from the time t to the time t + 1 (step S203). That is, the link creator 2371 sets t = t + 1. Then, the link creator 2371 determines whether or not the time t has reached the end time (step S204).

When the time t has not reached the end time (NO in step S204), the link creator 2371 performs the process subsequent to step S201.

On the other hand, when the time t has reached the end time (YES in step S204), the assignment unit 2372 shifts the process to the initial time t (step S205). That is, the assignment unit 2372 performs the following process from the initial time t0. The assignment unit 2372 assigns weights to the links created by the link creator 2371 on the basis of the charge/discharge graph, in which the links are established, the charge/discharge worth table, and the charge/discharge amount table (step S206). Here, when a weight value has already been assigned to a destination node of a link, the assignment unit 2372 assigns the smaller weight value as a weight of the destination node of the link. Next, the assignment unit 2372 shifts the process from time t to time t + 1 (step S207). That is, the assignment unit 2372 sets t = t + 1.

Then, the assignment unit 2372 determines whether or not the time t has reached the end time (step S208). When the time t has not reached the end time (NO in step S208), the assignment unit 2372 performs the process from step S206 onward.

On the other hand, when the time t has reached the end time (YES in step S208) or when the time t has not reached the end time (NO in step S204), the calculator 2373 calculates final weights of the nodes (step S209). Thereafter, the operation plan creator 2374 creates an operation plan on the basis of the calculation result and the charge/discharge graph (step S210). For example, the operation plan creator 2374 creates an operation plan by selecting a path having the minimum cost from a node with a small final weight value on the basis of the charge/discharge graph.

According to the operation plan creation device 2 configured as described above, it is possible to create a practical operation plan. This advantageous effect is described in detail below.

Specifically, first, the operation plan creation device 2 predicts a power demand and the amount of power generated by the PV system 5. Next, the operation plan creation device 2 calculates a charge/discharge worth, a stop worth, and a charge/discharge amount on the basis of the prediction result and electricity rate information. Then, the operation plan creation device 2 creates a charge/discharge graph in which weights are assigned to links and nodes at each time, using the calculated charge/discharge worth, stop worth and charge/discharge amount. The operation plan creation device 2 creates an operation plan by selecting a path having the minimum cost from the end time of the charge/discharge graph. In this manner, the operation plan creation device 2 can create the operation plan of the storage battery 3 only through simple calculation by the dynamic programming method. Therefore, it is possible to easily create an operation plan.

A modified example of the operation plan creation device 2 according to the first embodiment is described below.

The power demand predictor 21 may predict a power demand after a certain time on the day from a power demand up to the certain time. In this case, a power demand after a certain time on the day can be predicted by retrieving a power demand curve similar to a power demand curve up to that time from a history and obtaining a part of the retrieved demand curve after that time as a prediction. Although a simple power demand prediction method has been described above as an example here, the power demand prediction method need not be limited to the above method. For example, the generated power demand prediction may be corrected using weather information or the like.

In the present embodiment, a charge/discharge graph in which the storage battery capacity is taken on the vertical axis is described as an example. However, the present embodiment may also be configured such that an operation plan of a storage battery and fuel cells is set up using a table in which a combination of a charge/discharge graph with the amounts of power generated by the fuel cells or a stored hot water amount is taken on the vertical axis.

In the shown configuration of the present embodiment, the link creator 2371 establishes all possible links, but the present invention is not limited to this configuration. For example, the link creator 2371 may be configured so as not to establish obviously unnecessary links.

(Second embodiment)

In the shown configuration of the first embodiment, the assignment unit 2372 assigns weights by performing calculation for links of nodes in a (forward) direction in which the time passes. The second embodiment differs from the first embodiment in that the assignment unit 2372 assigns weights to nodes backward from the end time. Therefore, only differences of the second embodiment from the first embodiment will be described.

In the second embodiment, a weight of the end time is a value obtained by assigning a minus sign to the cost required to obtain the remaining amount of the storage battery. The reason for assigning a minus sign is to express a negative cost, that is, to express that it has a worth. In this situation, the assignment unit 2372 assigns weights to nodes in the reverse direction using the weights of the links assigned in the first embodiment.

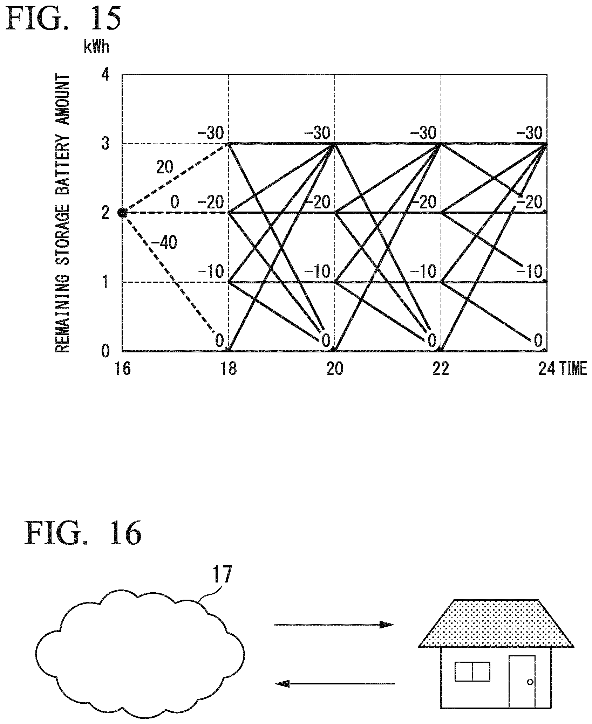

Fig. 15 is a diagram showing a specific example of a reverse-directed charge/discharge graph. In the example shown in Fig. 15, node weights assigned from 24 o'clock, which is the end time, to 18 o'clock are shown in the reverse-directed charge/discharge graph. Although it is shown in this example that node weights are assigned from 24 o'clock to 18 o'clock, node weights may be assigned backward up to time 0. Here, the operation plan creator 2374 creates an operation plan by selecting a path having the lowest electric power unit price (cost) at time 0.

The reverse-directed charge/discharge graph illustrates a policy of determining a charge/discharge plan of the storage battery 3 at each time. Let us assume that the PV power generation prediction has failed and the power generated by PV power generation is 0. In this case, charge/discharge plans of the storage battery 3 have three patterns of 1 kW charge, stop, and 2 kW discharge. From the costs of nodes at 18 o'clock and the costs of links to 16 o'clock, it can be seen that an operation plan with the cheapest cost at 16 o'clock is that of discharging at 16 o'clock. Therefore, using such a reverse-directed charge/discharge graph makes it possible to determine the charge/discharge policy for each time even when prediction fails.

According to the operation plan creation device 2 of the second embodiment configured as described above, an operation plan is created on the basis of a larger amount of information than the operation plan creation device 2 in the first embodiment. This advantageous effect is described in detail below.

Specifically, in the operation plan creation device 2 according to the first embodiment, links are established from a certain point at the time t = 0 (when the remaining amount of the storage battery is 0) to obtain the cost of each path, thereby creating an operation plan. On the other hand, in the operation plan creation device 2 according to the second embodiment using the reverse-directed charge/discharge graph, there are a plurality of start points for creating an operation plan according to the remaining amount of the storage battery. Therefore, the operation plan creation device 2 can create an operation plan on the basis of much information.

(Third embodiment)

The third embodiment differs from the second embodiment in that an operation plan is created at each time using a plurality of reverse-directed charge/discharge graphs. Therefore, only differences of the third embodiment from the second embodiment will be described. In this case, the operation plan creation device 2 needs to create the charge generation/discharge graphs using history data of the power demand and the amounts of PV-generated power of days assumed similar to the day of interest. Then, the operation plan creation device 2 obtains the difference between the charge/discharge amount of the time of interest and the cost obtained at that time in each of the plurality of created charge/discharge graphs. By aggregating the differences and adopting a method with a low average cost, the operation plan creation device 2 can set up a plan reflecting information regarding a plurality of past days. Of course, a method of merging a plurality of reverse-directed charge/discharge graphs, taking an average for each node, and combining them into one reverse-directed charge/discharge graph is conceivable.

(Fourth embodiment)

The fourth embodiment uses a cloud. Fig. 16 is a system configuration diagram showing a system configuration according to the fourth embodiment.

As shown in Fig. 16, in the fourth embodiment, an operation plan is created by performing communication between a cloud 17 and an operation plan creation device 2 provided in a building. In this configuration, the operation plan creation device 2 includes a communication unit. The communication unit performs communication with the cloud 17. The cloud 17 has all or some of the functions of the operation plan creation device 2. As an example, let us consider the case of creating a charge/discharge graph on the cloud. In this case, the cloud 17 has all the functional units except the operation plan creator 2374 of the planner 23. Processes in such a configuration are described below.

The operation plan creation device 2 transmits a prediction result of power demand prediction, a result of prediction of the amount of PV-generated power, and electricity rate information to the cloud 17. The cloud 17 executes the above processes (for example, the processes from step S106 in Fig. 13 to step S209 in Fig. 14). Thereafter, the cloud 17 transmits a charge/discharge graph as the execution result to the operation plan creation device 2. The operation plan creator 2374 of the operation plan creation device 2 creates an operation plan from the received charge/discharge graph.

According to the operation plan creation device 2 of the fourth embodiment configured as described above, it is possible to obtain the same advantageous effects as those of the first embodiment.

Further, the operation plan creation device 2 in the fourth embodiment causes the cloud 17 to execute some of the processes up to the process of creating an operation plan. Thus, the operation plan creation device 2 does not need to have all the functional units that perform the processes up to the process of creating an operation plan. Therefore, it is possible to reduce the calculation amount on the side of the residence and also to reduce the hardware cost.

Modified examples common to the embodiments are described below.

In the shown configuration of each of the above embodiments, an operation plan is created using a result of prediction of the amount of power generated by the PV system 5, but the embodiments are not limited to this configuration. For example, the operation plan creation device 2 may be configured to create an operation plan using a result of prediction of the amount of power generated by a system which uses renewable energy other than the PV system 5.

According to at least one of the embodiments described above, it is possible to easily create an operation plan by including the planner 23 configured to create an operation plan of a storage battery 3 on the basis of a graph created on the basis of both a prediction result of each of a power demand and the amount of power generated by the PV system

and electricity rate information representing information of an electric power unit price of each time, the graph including a link representing a change of the remaining amount of the storage battery 3 due to charging/discharging of the storage battery 3 at each time and information of a power cost of a destination node of the link caused by the change of the remaining amount.

While some embodiments of the invention have been described, these embodiments have been presented by way of example and are not intended to limit the scope of the invention. These embodiments can be implemented in various other forms, and various omissions, substitutions, and changes can be made without departing from the gist of the invention. These embodiments and modifications thereof are included in the scope or gist of the invention as well as included in the invention described in the claims and the equivalent scope thereof.

**Claims**

1. A storage battery operation plan creation device comprising a planner configured to create an operation plan of a storage battery on the basis of a graph created on the basis of both a prediction result of each of a power demand and an amount of power generated by a system which uses renewable energy and electricity rate information representing information of an electric power unit price of each time, the graph including a link representing a change of the remaining amount of the storage battery due to charging/discharging of the storage battery at each time and information of a power cost of a destination node of the link caused by the change of the remaining amount.

2. The storage battery operation plan creation device according to claim 1, wherein the planner is configured to create the operation plan by selecting a path with a minimum power cost indicated in the graph.

3. The storage battery operation plan creation device according to claim 1 or 2, wherein, when a plurality of power costs are present in the destination node of the link, the planner is configured to assign a lower power cost as the power cost of the destination node.

4. The storage battery operation plan creation device according to claim 1 or 2, wherein the planner is configured to use the graph created backward from an end time when creating the operation plan.

5. The storage battery operation plan creation device according to claim 1 or 2, further comprising a communication unit configured to transmit the prediction result and the electricity rate information to a server provided on a cloud and to receive the graph generated by the server,
wherein the planner is configured to create an operation plan of the storage battery on the basis of the received graph.

6. A storage battery operation plan creation method comprising creating an operation plan of a storage battery on the basis of a graph created on the basis of both a prediction result of each of a power demand and an amount of power generated by a system which uses renewable energy and electricity rate information representing information of an electric power unit price of each time, the graph including a link representing a change of the remaining amount of the storage battery due to charging/discharging of the storage battery at each time and information of a power cost of a destination node of the link caused by the change of the remaining amount.

7. A non-transitory computer readable storage medium that stores a computer program to be executed by the computer to perform:

creating an operation plan of a storage battery on the basis of a graph created on the basis of both a prediction result of each of a power demand and an amount of power generated by a system which uses renewable energy and electricity rate information representing information of an electric power unit price of each time, the graph including a link representing a change of the remaining amount of the storage battery due to charging/discharging of the storage battery at each time and information of a power cost of a destination node of the link caused by the change of the remaining amount.

# FIG. 1

# FIG. 2

# FIG. 3

PLANNER 2

| 231 FIRST CHARGE WORTH CALCULATOR |
| 232 SECOND CHARGE WORTH CALCULATOR |
| 233 FIRST DISCHARGE WORTH CALCULATOR |
| 234 SECOND DISCHARGE WORTH CALCULATOR |
| 235 STOP WORTH CALCULATOR |

236 STORAGE

2361 CHARGE/DISCHARGE WORTH STORAGE

2362 CHARGE/DISCHARGE AMOUNT INFORMATION STORAGE

237 CREATOR

2371 LINK CREATOR

2372 ASSIGNMENT UNIT

2373 CALCULATOR

2374 OPERATION PLAN CREATOR

# FIG. 4

| t (MINUTE) | 0 | 1 | 2 | 3 | 4 | 5 | 6 | 1439 |
|---|---|---|---|---|---|---|---|---|
| CHARGE WORTH 1 (YEN) | | | | | | | | |
| CHARGE WORTH 2 (YEN) | | | | | | | | |
| DISCHARGE WORTH 1 (YEN) | | | | | | | | |
| DISCHARGE WORTH 2 (YEN) | | | | | | | | |
| STOP WORTH (YEN) | | | | | | | | |

# FIG. 5

| t (MINUTE) | 0 | 1 | 2 | 3 | 4 | 5 | 6 | 1439 |
|---|---|---|---|---|---|---|---|---|
| CHARGE AMOUNT 1 (YEN) | | | | | | | | |
| CHARGE AMOUNT 2 (YEN) | | | | | | | | |
| DISCHARGE AMOUNT 1 (YEN) | | | | | | | | |
| DISCHARGE AMOUNT 2 (YEN) | | | | | | | | |

# FIG. 6

# FIG. 7

FIG. 8

FIG. 9

FIG. 10

FIG. 11

FIG. 12

FIG. 13

```
                    ┌─────────────┐
                    │    START    │
                    └──────┬──────┘
                           │         S101
          ┌────────────────▼────────────────┐
          │ ACQUIRE ELECTRICITY RATE INFORMATION │
          └────────────────┬────────────────┘
                           │         S102
          ┌────────────────▼────────────────┐
          │      ACQUIRE WEATHER DATA        │
          └────────────────┬────────────────┘
                           │         S103
          ┌────────────────▼────────────────┐
          │   PREDICT AMOUNT OF POWER DEMAND  │
          └────────────────┬────────────────┘
                           │         S104
          ┌────────────────▼────────────────┐
          │ PREDICT AMOUNT OF PV-GENERATED POWER │
          └────────────────┬────────────────┘
                           │
                           │◄──────────────┐
                           │         S105  │
          ┌────────────────▼────────────────┐ │
          │   CALCULATE FIRST CHARGE WORTH   │ │
          └────────────────┬────────────────┘ │
                           │         S106  │
          ┌────────────────▼────────────────┐ │
          │  CALCULATE SECOND CHARGE WORTH   │ │
          └────────────────┬────────────────┘ │
                           │         S107  │
          ┌────────────────▼────────────────┐ │
          │ CALCULATE FIRST DISCHARGE WORTH  │ │
          └────────────────┬────────────────┘ │
                           │         S108  │
          ┌────────────────▼────────────────┐ │
          │ CALCULATE SECOND DISCHARGE WORTH │ │
          └────────────────┬────────────────┘ │
                           │         S109  │
          ┌────────────────▼────────────────┐ │
          │      CALCULATE STOP WORTH        │ │
          └────────────────┬────────────────┘ │
                           │         S110  │
          ┌────────────────▼────────────────┐ │
          │       RECORD EACH VALUE          │ │
          └────────────────┬────────────────┘ │
                           │         S111  │
                        ◇◇◇◇◇◇◇     NO      │
                    HAS RECORDING BEEN ─────┘
                    PERFORMED UP TO END
                          TIME?
                           │ YES
                           │         S112
          ┌────────────────▼────────────────┐
          │   OPERATION PLAN CREATION PROCESS │
          └────────────────┬────────────────┘
                           │
                    ┌──────▼──────┐
                    │     END     │
                    └─────────────┘
```

FIG. 14

START OF OPERATION
PLAN CREATION PROCESS

S201
T=0, SOC=0, WEIGHT (0, 0) = 0

S202
CREATE LINKS FROM TIME T TO T+1

S203
t=t+1

S204
T < END TIME?　　NO

YES　S205
t=0

S206
ASSIGN WEIGHT OF LINK
DESTINATION AT TIME T

S207
t=t+1

S208
T < END TIME?　　NO

YES　S209
CALCULATE FINAL WEIGHTS OF NODES

S210
CREATE OPERATION PLAN

END OF OPERATION
PLAN CREATION PROCESS

FIG. 15

FIG. 16

## INTERNATIONAL SEARCH REPORT

| International application No. |
| --- |
| PCT/JP2016/054789 |

**A. CLASSIFICATION OF SUBJECT MATTER**
*G06Q50/06(2012.01)i, H02J3/00(2006.01)i, H02J3/38(2006.01)i*

According to International Patent Classification (IPC) or to both national classification and IPC

**B. FIELDS SEARCHED**

Minimum documentation searched (classification system followed by classification symbols)
G06Q10/00-99/00, H02J3/00, H02J3/38

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho  1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2014-174735 A   (Toshiba Corp.),<br>22 September 2014 (22.09.2014),<br>paragraphs [0013] to [0056]; fig. 2, 9<br>& US 2014/0257585 A1<br>paragraphs [0031] to [0083]; fig. 2, 9<br>& WO 2014/136362 A1     & EP 2966610 A1 | 1-2,5-7<br>3-4 |
| Y | WO 2011/086886 A1   (Panasonic Corp.),<br>21 July 2011 (21.07.2011),<br>paragraphs [0001] to [0158]; fig. 10<br>& US 2012/0072040 A1<br>paragraphs [0001] to [0164]; fig. 10<br>& EP 2525470 A1          & CN 102349213 A | 3-4 |

| ☒ | Further documents are listed in the continuation of Box C. | ☐ | See patent family annex. |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>27 April 2016 (27.04.16) | Date of mailing of the international search report<br>17 May 2016 (17.05.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2016/054789 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-130618 A  (Panasonic Corp.),<br>30 June 2011 (30.06.2011),<br>entire text; all drawings<br>(Family: none) | 1-7 |
| A | JP 2012-210073 A  (Sony Corp.),<br>25 October 2012 (25.10.2012),<br>entire text; all drawings<br>& US 2012/0249056 A1<br>entire text; all drawings<br>& EP 2506380 A1        & CN 102738851 A | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014174735 A

**Non-patent literature cited in the description**

- **SHIMADA, KUROKAWA.** Insolation Forecasting Using Weather Forecast with Weather Change Patterns. *IEEE Trans. PE,* vol. 127 (11,2007), 1219-1225